# EUROPEAN PATENT APPLICATION

(11) **EP 2 843 295 A1**
(43) Date of publication of application: **04.03.2015**
(21) Application number: 13781057.8
(22) Date of filing: 19.04.2013
(51) Int. Cl.: F21S 2/00, G02F 1/1333, G02F 1/13357, F21Y 101/02

(54) **BACKLIGHT UNIT AND LIQUID CRYSTAL DISPLAY APPARATUS**

(30) Priority: 26.04.2012 JP 2012101533
(71) Applicant: Sharp Kabushiki Kaisha, Osaka-shi, Osaka 545-8522 (JP)
(72) Inventor: INUI, Yoji, Osaka-shi, Osaka 545-8522 (JP); TAKAOKA, Akiyoshi, Osaka-shi, Osaka 545-8522 (JP); HATSUDA, Kenichi, Osaka-shi, Osaka 545-8522 (JP); ADACHI, Takahiro, Osaka-shi, Osaka 545-8522 (JP); YUASA, Minoru, Osaka-shi, Osaka 545-8522 (JP); YOSHIDA, Hideo, Osaka-shi, Osaka 545-8522 (JP)
(74) Representative: Müller-Boré & Partner Patentanwälte PartG mbB
(86) International application number: PCT/JP2013/002663
(87) International publication number: WO 2013/161241

(57) **Abstract**

A backlight unit includes: a light guide plate; a light source facing an entrance surface of the light guide plate; an optical sheet member located toward an exit surface of the light guide plate; and a frame surrounding the optical sheet member, the light source, and the light guide plate to retain the optical sheet member, the light source, and the light guide plate. The optical sheet member includes a protrusion protruding toward the light source and fixed to the light guide plate.

## Description

### TECHNICAL FIELD

The present invention relates to backlight units and liquid crystal displays including backlight units.

### BACKGROUND ART

In recent years, liquid crystal displays have been widely used, as display devices, in electronic devices, such as mobile devices. In particular, transmissive and semi-transmissive liquid crystal displays each include a liquid crystal display panel, and a backlight unit that is an illuminating device facing the liquid crystal display panel.

The backlight unit includes a light guide plate facing the liquid crystal display panel, an optical sheet provided between the light guide plate and the liquid crystal display panel, a light source, such as a light emitting diode (LED), located laterally outward of the light guide plate, and a frame retaining the light source and the light guide plate.

Here, the optical sheet controls the optical characteristics of incident light. The optical sheet is typically made of a resin material, and thus, tends to be thermally expanded or thermally deformed due to, for example, variations in temperature. If the entire periphery of the optical sheet is fixed to, for example, the frame or the liquid crystal display panel, variations in temperature, for example, cause a bend in the optical sheet. The bend therein damages the display quality.

In contrast, PATENT DOCUMENT 1 describes that a side of a generally rectangular optical sheet has several protrusions, and only the protrusions of the optical sheet are adhesively fixed to a frame with a double-sided tape. This adhesive fixing reduces the total area of restrained portions of the optical sheet. This reduction can reduce the bend in the optical sheet even with the optical sheet thermally expanded.

PATENT DOCUMENT 2 describes that protrusions of an optical sheet are each inserted into a corresponding one of grooves formed in a frame to position the optical sheet. This insertion prevents the optical sheet from being displaced during assembly of a backlight unit, and facilitates the assembly.

### CITATION LIST

### PATENT DOCUMENTS

PATENT DOCUMENT 1: Japanese Unexamined Patent Publication No. 2009-122167
PATENT DOCUMENT 2: Japanese Unexamined Patent Publication No. 2001-133782

### SUMMARY OF THE INVENTION

### TECHNICAL PROBLEM

A user may drop the above backlight unit and the liquid crystal display including the backlight unit from the user's hand by mistake. In this case, a high impact force applied to the backlight unit may displace the optical sheet. If an edge of the optical sheet is shifted to a display region, light from the backlight unit directly enters a region of the liquid crystal display panel without passing through the optical sheet, thereby reducing the display quality. For this reason, preferably, the optical sheet is more securely fixed to the frame.

In recent years, the thickness and size of each of a backlight unit and a liquid crystal display have been highly reduced. The width of a peripheral portion (referred to also as a frame portion) of the liquid crystal display corresponding to a non-display region thereof is designed to be, for example, about 1-1.5 mm, which is very narrow. Accordingly, a frame is also highly narrow. This makes it difficult to ensure that the area where protrusions of an optical sheet are fixed to the frame is large enough.

In other words, in the conventional backlight unit and the conventional liquid crystal display, it is difficult to securely fix the optical sheet within the backlight unit while the narrow frame is used.

It is therefore an object of the present invention to securely fix an optical sheet member within a backlight unit while a narrow frame is used.

### SOLUTION TO THE PROBLEM

To achieve the object, a backlight unit according to a first aspect of the invention includes: a light guide plate having an entrance surface on which light is incident, and an exit surface through which guided light exits; a light source facing the entrance surface of the light guide plate; an optical sheet member located toward the exit surface of the light guide plate; and a frame surrounding the optical sheet member, the light source, and the light guide plate to retain the optical sheet member, the light source, and the light guide plate. The optical sheet member includes a protrusion protruding toward the light source and fixed to the light guide plate.

According to the first aspect of the invention, a region of the optical sheet member of the backlight unit near the light source is effectively used to allow a sufficiently large area of the protrusion of the optical sheet member to be fixed to the light guide plate. This can ensure that while the frame itself is narrow, the optical sheet member is fixed within the backlight unit.

According to a second aspect of the invention, in the first aspect of the invention, the protrusion may be sandwiched between the light guide plate and a fixing member so as to be fixed to the light guide plate.

According to the second aspect of the invention, the protrusion of the optical sheet member is sandwiched between the light guide plate and the fixing member, thereby preferably fixing the optical sheet member.

According to a third aspect of the invention, in the second aspect of the invention, the fixing member may be a flexible substrate connected to the light source.

According to the third aspect of the invention, the flexible substrate connected to the light source is utilized to enable preferable fixing of the protrusion of the optical sheet member.

According to a fourth aspect of the invention, in the first aspect of the invention, the protrusion may be fixed to the light guide plate and the frame.

According to the fourth aspect of the invention, not only the light guide plate, but also the frame can fix the protrusion of the optical sheet member. This can further ensure that the optical sheet member is fixed within the backlight unit.

According to a fifth aspect the invention, in the fourth aspect of the invention, the protrusion may be sandwiched between a fixing member and both of the light guide plate and the frame so as to be fixed to the light guide plate and the frame.

According to the fifth aspect of the invention, the protrusion of the optical sheet member is sandwiched not only between the light guide plate and the fixing member but also between the frame and the fixing member.

According to a sixth aspect of the invention, in the fifth aspect of the invention, the fixing member may be a flexible substrate connected to the light source.

According to the sixth aspect of the invention, the flexible substrate connected to the light source is utilized to enable preferable fixing of the protrusion of the optical sheet member.

According to a seventh aspect of the invention, in any one of the fourth through sixth aspects of the invention, the light source may include a plurality of light sources provided along the entrance surface of the light guide plate, and the protrusion may be located between an adjacent pair of the light sources.

According to the seventh aspect of the invention, a region between an adjacent pair of the light sources is effectively used to allow a sufficiently larger area of the protrusion of the optical sheet member to be fixed.

According to an eighth aspect of the invention, in the second, third, fifth, sixth, or seventh aspect of the invention, the optical sheet member may include a plurality of optical sheets, and an adhesive material may be interposed between at least one of the optical sheets and the fixing member.

According to the eighth aspect of the invention, the optical sheet member and the fixing member are adhesively fixed to each other with the adhesive material. This can further ensure that the optical sheet member is fixed within the backlight unit.

According to a ninth aspect of the invention, in any one of the first through eighth aspects of the invention, the frame may have a groove or a through hole extending across a width of the frame, and the optical sheet member may have an engagement portion protruding to engage in the groove or the through hole.

According to the ninth aspect of the invention, not only the above-described protrusion, but also the engagement portion engaging in the groove or the through hole of the frame can preferably fix the optical sheet member. Since the groove or the through hole extends across the width of the frame, a sufficiently large area of the engagement portion can engage in the groove or the through hole to fix the optical sheet member.

A liquid crystal display according to a tenth aspect of the invention includes: the backlight unit of any one of the first through ninth aspects of the invention; and a liquid crystal display panel facing the backlight unit.

The tenth aspect of the invention can ensure that while a frame portion of the liquid crystal display corresponding to the frame is narrow, the optical sheet member is fixed within the backlight unit.

### ADVANTAGES OF THE INVENTION

According to the present invention, a region of the optical sheet member of the backlight unit near the light source is effectively used to allow a sufficiently large area of the protrusion of the optical sheet member to be fixed to the light guide plate. This can ensure that while the frame itself is narrow, the optical sheet member is fixed within the backlight unit.

### BRIEF DESCRIPTION OF THE DRAWINGS

[FIG. 1] FIG. 1 is an enlarged plan view illustrating LED elements of a backlight unit according to a first embodiment and a region surrounding the LED elements.
[FIG. 2] FIG. 2 is an enlarged plan view illustrating a region of the backlight unit of the first embodiment opposite to the LED elements and a region surrounding the region of the backlight unit.
[FIG. 3] FIG. 3 is an enlarged plan view illustrating one of engagement portions in FIG. 2 and a region surrounding the one of the engagement portions.
[FIG. 4] FIG. 4 is an enlarged plan view illustrating another one of the engagement portions in FIG. 1 and a region surrounding the another one of the engagement portions.
[FIG. 5] FIG. 5 is an enlarged plan view illustrating one of first protrusions in FIG. 1 and a region surrounding the one of the first protrusions.
[FIG. 6] FIG. 6 is an enlarged plan view illustrating a second protrusion in FIG. 1 and a region surrounding the second protrusion.
[FIG. 7] FIG. 7 is a cross-sectional view taken along the line VII-VII in FIG. 1.
[FIG. 8] FIG. 8 is a cross-sectional view illustrating a region of a liquid crystal display including the backlight unit to which a liquid crystal display panel is assembled. The region corresponds to a region of the backlight unit illustrated in FIG. 7.
[FIG. 9] FIG. 9 is a cross-sectional view taken along the line IX-IX in FIG. 1.
[FIG. 10] FIG. 10 is a cross-sectional view illustrating a region of the liquid crystal display including the backlight unit to which the liquid crystal display panel is assembled. The region corresponds to a region of the backlight unit illustrated in FIG. 9.
[FIG. 11] FIG. 11 is a cross-sectional view illustrating a region of the liquid crystal display including the backlight unit to which the liquid crystal display panel is assembled. The region corresponds to a region of the backlight unit illustrated in the form of a cross-sectional view taken along the line XI-XI in FIG. 3.
[FIG. 12] FIG. 12 is an enlarged plan view illustrating LED elements of a backlight unit according to a variation of the first embodiment and a region surrounding the LED elements.
[FIG. 13] FIG. 13 is an enlarged plan view illustrating LED elements of a backlight unit according to another variation of the first embodiment and a region surrounding the LED elements.
[FIG. 14] FIG. 14 is an enlarged plan view illustrating engagement portions according to still another variation of the first embodiment and a region surrounding the engagement portions.
[FIG. 15] FIG. 15 is an enlarged plan view illustrating LED elements of a backlight unit according to a second embodiment and a region surrounding the LED elements.
[FIG. 16] FIG. 16 is an enlarged plan view illustrating one of third protrusions in FIG. 15 and a region surrounding the one of the third protrusions.
[FIG. 17] FIG. 17 is an enlarged plan view illustrating LED elements of a backlight unit according to a variation of the second embodiment and a region surrounding the LED elements.
[FIG. 18] FIG. 18 is a cross-sectional view illustrating the configuration of a liquid crystal display according to a third embodiment.

### DESCRIPTION OF EMBODIMENTS

Embodiments of the present invention will now be described in detail with reference to the drawings. The present invention should not be limited to the following embodiments.

### «First Embodiment of the Invention»

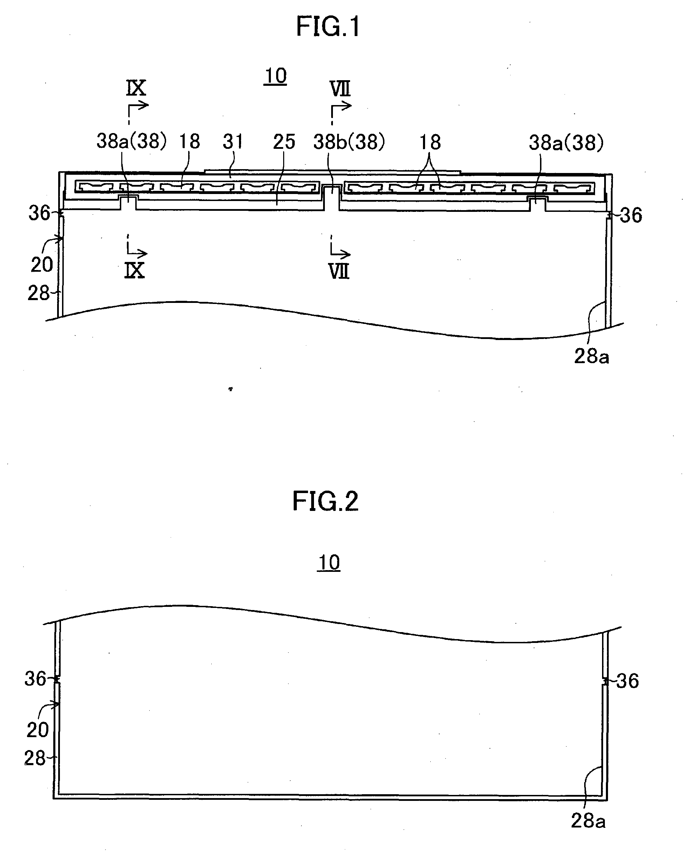

FIGS. 1-9 illustrate a first embodiment of the present invention.

FIG. 1 is an enlarged plan view illustrating LED elements 18 of a backlight unit 10 according to a first embodiment and a region surrounding the LED elements 18. FIG. 2 is an enlarged plan view illustrating a region of the backlight unit 10 of the first embodiment opposite to the LED elements 18 and a region surrounding the region of the backlight unit 10.

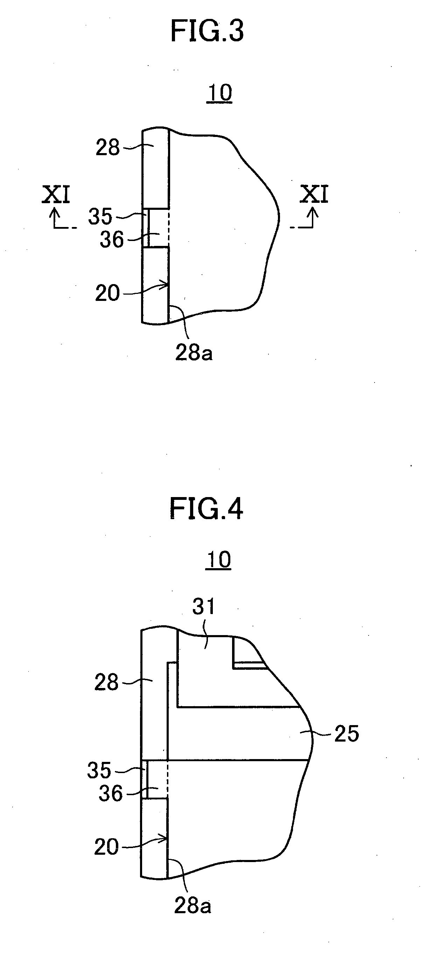

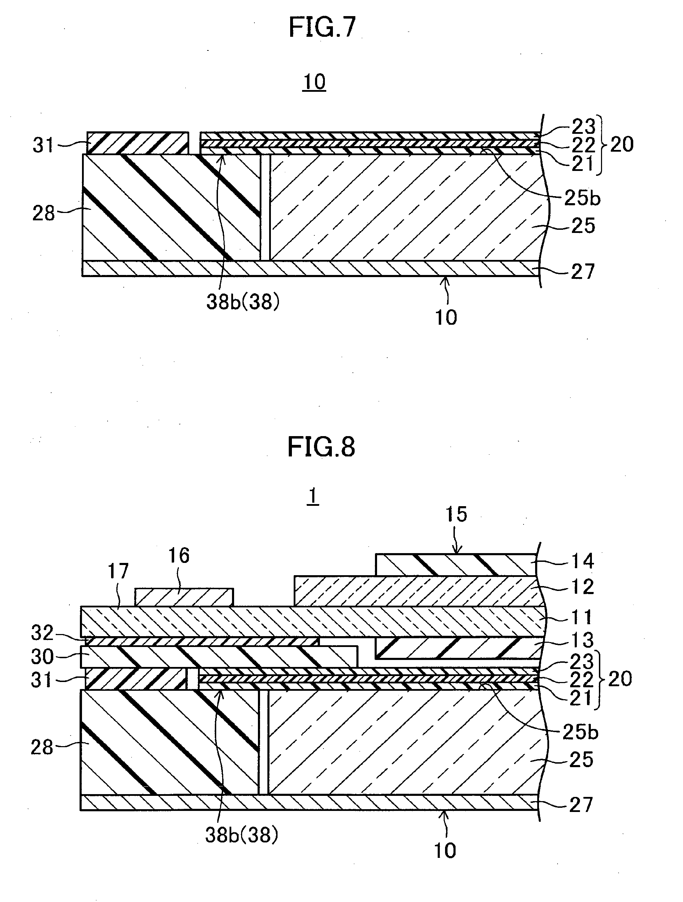

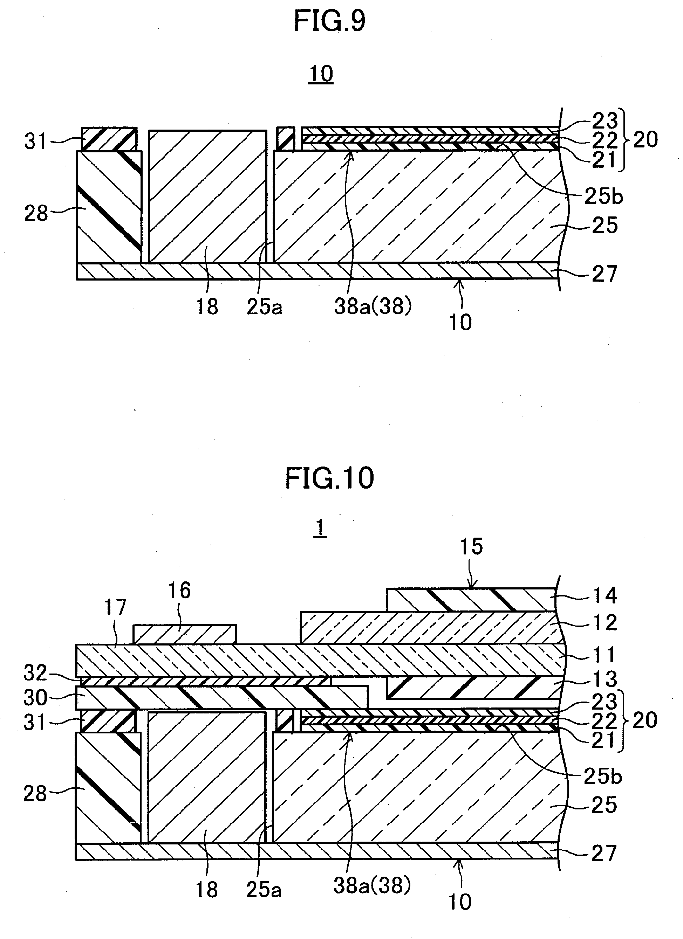

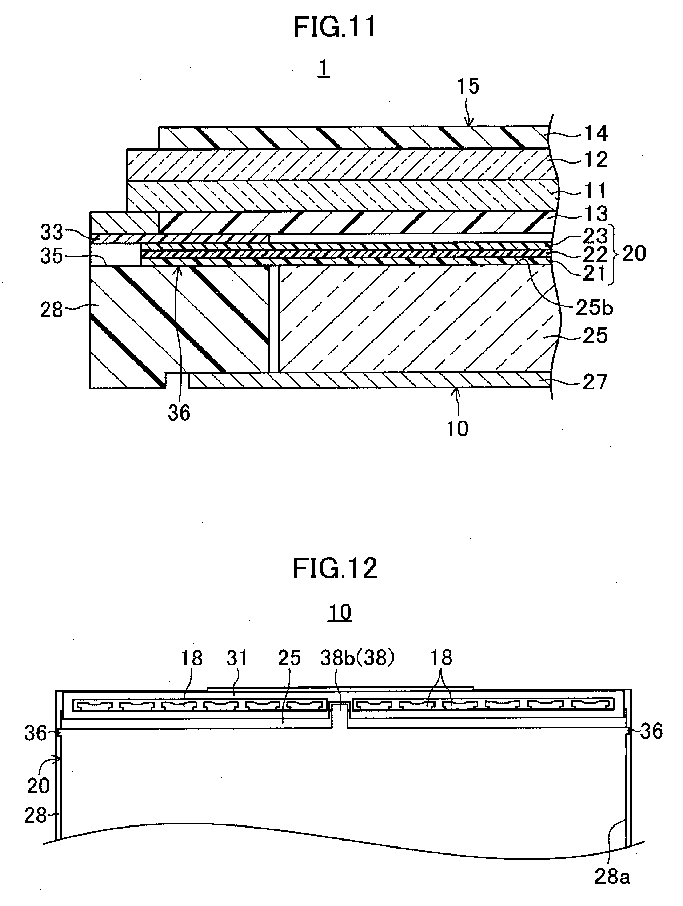

FIG. 7 is a cross-sectional view taken along the line VII-VII in FIG. 1. FIG. 8 is a cross-sectional view illustrating a region of a liquid crystal display 1 including the backlight unit 10 to which a liquid crystal display panel 15 is assembled. The region corresponds to a region of the backlight unit 10 illustrated in FIG. 7. FIG. 9 is a cross-sectional view taken along the line IX-IX in FIG. 1. FIG. 10 is a cross-sectional view illustrating a region of the liquid crystal display 1 including the backlight unit 10 to which the liquid crystal display panel 15 is assembled. The region corresponds to a region of the backlight unit 10 illustrated in FIG. 9. FIG. 11 is a cross-sectional view illustrating a region of the liquid crystal display 1 including the backlight unit 10 to which the liquid crystal display panel 15 is assembled. The region corresponds to a region of the backlight unit 10 illustrated in the form of a cross-sectional view taken along the line XI-XI in FIG. 3.

The liquid crystal display 1 of this embodiment includes the backlight unit 10 serving as an illuminating device, and the liquid crystal display panel 15 facing the backlight unit 10. The liquid crystal display 1 is, for example, a display of a mobile device, and the width of a peripheral portion (frame portion) of the liquid crystal display 1 corresponding to a non-display region thereof is designed to be, for example, about 1-1.5 mm, which is very narrow.

As illustrated in FIGS. 8 and 10, the liquid crystal display panel 15 includes a thin film transistor (TFT) substrate 11 serving as an active matrix substrate, a counter substrate 12 facing the TFT substrate 11, and a liquid crystal layer (not shown) provided between the TFT substrate 11 and the counter substrate 12.

A polarizing plate 13 is bonded to a surface of the TFT substrate 11 opposite to a surface thereof on which the counter substrate 12 is located. In contrast, a polarizing plate 14 is bonded to a surface of the counter substrate 12 opposite to a surface thereof on which the TFT substrate 11 is located. The TFT substrate 11 has a mounting region 17 which does not face the counter substrate 12 and on which a driver integrated circuit (IC) 16 and other components are mounted.

As illustrated in FIGS. 8-11, the backlight unit 10 includes a light guide plate 25, light emitting diode (LED) elements 18, an optical sheet member 20, and a frame 28. The light guide plate 25 has an entrance surface 25a on which light is incident, and an exit surface 25b through which light exits. The LED elements 18 are light sources facing the entrance surface 25a of the light guide plate 25. The optical sheet member 20 is placed toward the exit surface 25b of the light guide plate 25. The frame 28 surrounds the optical sheet member 20, the LED elements 18, and the light guide plate 25 to retain them.

The frame 28 is made of, for example, plastic, and is in the form of a rectangular frame having a generally rectangular opening 28a as illustrated in FIGS. 1 and 2. A reflection plate 27 is provided on a surface of the frame 28 opposite to a surface thereof on which the liquid crystal display panel 15 is located, and blocks the opening 28a.

As illustrated in FIGS. 8-11, the rectangular light guide plate 25 is housed in the opening 28a of the frame 28 while being placed on the reflection plate 27. The exit surface 25b of the light guide plate 25 corresponds to a surface of the light guide plate 25 opposite to a surface thereof on which the reflection plate 27 is located.

As illustrated in FIGS. 1 and 10, the LED elements 18 are provided in the frame 28 to face the entrance surface 25a of the light guide plate 25, and are close to the frame 28. The LED elements 18 are aligned along the entrance surface 25a, and an adjacent pair of the aligned LED elements 18 in the center of the alignment are spaced apart by a relatively long distance. A portion of the frame 28 in a region of the backlight unit 10 where the adjacent pair of the LED elements 18 are spaced apart by a relatively long distance branches from outside (from above in FIG. 1), and extends toward the light guide plate 25. This allows light entering the light guide plate 25 to exit uniformly from the exit surface 25b.

As illustrated in FIGS. 8 and 10, the LED elements 18 are connected to a flexible substrate 30 for supplying, for example, electric power or a control signal to the LED elements 18. The flexible substrate 30 is, for example, a flexible printed circuit board (FPC). As illustrated in FIGS. 1 and 10, the flexible substrate 30 is located on surfaces of the LED elements 18 near the liquid crystal display panel 15, and is adhesively fixed to the frame 28 and the light guide plate 25 with a first adhesive material 31 interposed between the flexible substrate 30 and both of the frame 28 and the light guide plate 25. The first adhesive material 31 is in the form of a rectangular frame, and surrounds the LED elements 18.

The flexible substrate 30 overlaps the mounting region 17 of the TFT substrate 11. A second adhesive material 32 is interposed between the flexible substrate 30 and the TFT substrate 11. Thus, the liquid crystal display panel 15 is adhesively fixed to the backlight unit 10.

The optical sheet member 20 includes a plurality of stacked optical sheets 21, 22, and 23. The optical sheet member 20 includes, for example, a first optical sheet 21, a second optical sheet 22, and a third optical sheet 23. The first optical sheet 21 is placed on the surface of the light guide plate 25. The second optical sheet 22 is stacked on the first optical sheet 21. The third optical sheet 23 is stacked on the second optical sheet 22. The optical sheets 21, 22, and 23 are, for example, prism sheets or diffusion sheets, and control the optical characteristics of incident light. The optical sheets 21, 22, and 23 each have substantially the same size as the exit surface 25b of the light guide plate 25.

Here, FIG. 3 is an enlarged plan view illustrating one of engagement portions 36 in FIG. 2 and a region surrounding the one of the engagement portions 36. FIG. 4 is an enlarged plan view illustrating another one of the engagement portions 36 in FIG. 1 and a region surrounding the another one of the engagement portions 36.

As illustrated in FIGS. 3 and 4, grooves 35 are formed in a surface of the frame 28 near the liquid crystal display panel 15 to extend across the width of the frame 28. The optical sheet member 20 has the engagement portions 36 each protruding to engage in a corresponding one of the grooves 35. Two opposite sides of the optical sheet member 20 each have, for example, two of the engagement portions 36.

The engagement portions 36 are portions of a stack of the optical sheets 21, 22, and 23. The engagement portions 36 do not each fill a corresponding one of the grooves 35, and a portion of each groove 35 near a distal end of a corresponding one of the engagement portions 36 forms a space. Thus, the engagement portions 36 of the optical sheet member 20 are fixed to the frame 28.

The frame 28 may have through holes extending across the width of the frame 28 instead of the grooves 35, and the engagement portions 36 of the optical sheet member 20 may each engage in a corresponding one of the through holes. This also allows the optical sheet member 20 to be fixed to the frame 28, and can further prevent the engagement portions 36 from being detached from the frame 28.

As illustrated in FIG. 1, the optical sheet member 20 has protrusions 38 protruding toward the LED elements 18.

The protrusions 38 of this embodiment include first protrusions 38a and a second protrusion 38b. As illustrated in FIG. 1, the second protrusion 38b is provided at the center of a side of the optical sheet member 20 corresponding to the entrance surface 25 a of the light guide plate 25, and protrudes beyond the first protrusion 38a. The two first protrusions 38a are each spaced apart from the second protrusion 38b by a predetermined distance, and the second protrusion 38b is located between the two first protrusions 38a.

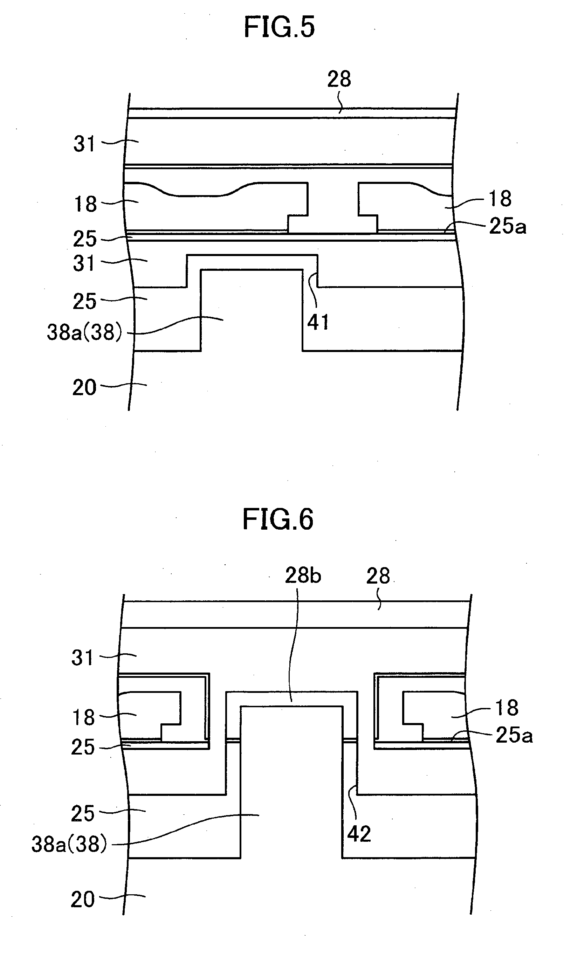

Here, FIG. 5 is an enlarged plan view illustrating one of the first protrusions 38a in FIG. 1 and a region surrounding the one of the first protrusions 38a. FIG. 6 is an enlarged plan view illustrating the second protrusion 38b in FIG. 1 and a region surrounding the second protrusion 38b.

As illustrated in FIG. 5, a portion of the first adhesive material 31 near a distal end of each first protrusion 38a has a recessed portion 41. A distal end portion of the first protrusion 38a is located inside the recessed portion 41, and contacts the light guide plate 25 inside the recessed portion 41.

As illustrated in FIG. 10, the first protrusions 38a are sandwiched between the light guide plate 25 and the flexible substrate 30 serving as a fixing member so as to be fixed to the light guide plate 25. The distal end portion of each first protrusion 38a is surrounded by the recessed portion 41 to reduce the displacement of the optical sheet member 20 along the exit surface 25b.

As illustrated in FIG. 6, a portion of the first adhesive material 31 near a distal end of the second protrusion 38b has a recessed portion 42 that is deeper than the recessed portion 41. The recessed portion 42 is formed between an adjacent pair of the LED elements 18.

In contrast, the frame 28 has a protruding portion 28b extending along the wall of the recessed portion 42 and protruding inwardly of the frame 28. Thus, a portion of the light guide plate 25 and a portion of the protruding portion 28b of the frame 28 is located inside the recessed portion 42.

Since the distal end portion of the second protrusion 38b is located inside the recessed portion 42, the distal end portion thereof is located between the adjacent pair of the LED elements 18, and contacts the light guide plate 25 and the protruding portion 28b of the frame 28 inside the recessed portion 42.

As illustrated in FIG. 8, the second protrusion 38b is sandwiched between the flexible substrate 30 and both of the light guide plate 25 and the frame 28, thereby fixing the second protrusion 38b to the light guide plate 25 and the frame 28. Thus, the distal end portion of the second protrusion 38b is surrounded by the recessed portion 42 to reduce the displacement of the optical sheet member 20 along the exit surface 25b.

The fixing member should not be limited to the flexible substrate 30, and can be any other members pressing the protrusions 38 toward the light guide plate 25.

### -Advantages of First Embodiment-

For the above reason, according to the first embodiment, a region of the optical sheet member 20 of the backlight unit 10 near the LED elements 18 is effectively used to allow a sufficiently large area of each of the first and second protrusions 38a and 38b of the optical sheet member 20 to be fixed to the light guide plate 25. This can ensure that while the frame 28 itself is narrow, and the frame portion of the liquid crystal display 1 is thus narrow, the optical sheet member 20 is fixed within the backlight unit 10.

Furthermore, the first protrusions 38a of the optical sheet member 20 are sandwiched between the light guide plate 25 and the flexible substrate 30, thereby preferably fixing the optical sheet member 20. The second protrusion 38b of the optical sheet member 20 can be sandwiched between the flexible substrate 30 and both of the light guide plate 25 and the frame 28, thereby further ensuring that the optical sheet member 20 is fixed within the backlight unit 10. The flexible substrate 30 connected to the LED elements 18 is utilized to enable preferable fixing of the protrusions 38 of the optical sheet member 20.

Furthermore, the second protrusion 38b allows the effective use of a region between an adjacent pair of the LED elements 18, thereby fixing a sufficiently larger area of the optical sheet member 20.

Additionally, not only the above-described protrusions 38, but also the engagement portions 36 engaging in the grooves 35 of the frame 28 can preferably fix the optical sheet member 20. Since the grooves 35 extend across the width of the frame 28, a sufficiently large area of each engagement portion 36 can engage in a corresponding one of the grooves 35 to fix the optical sheet member 20.

### (Variations)

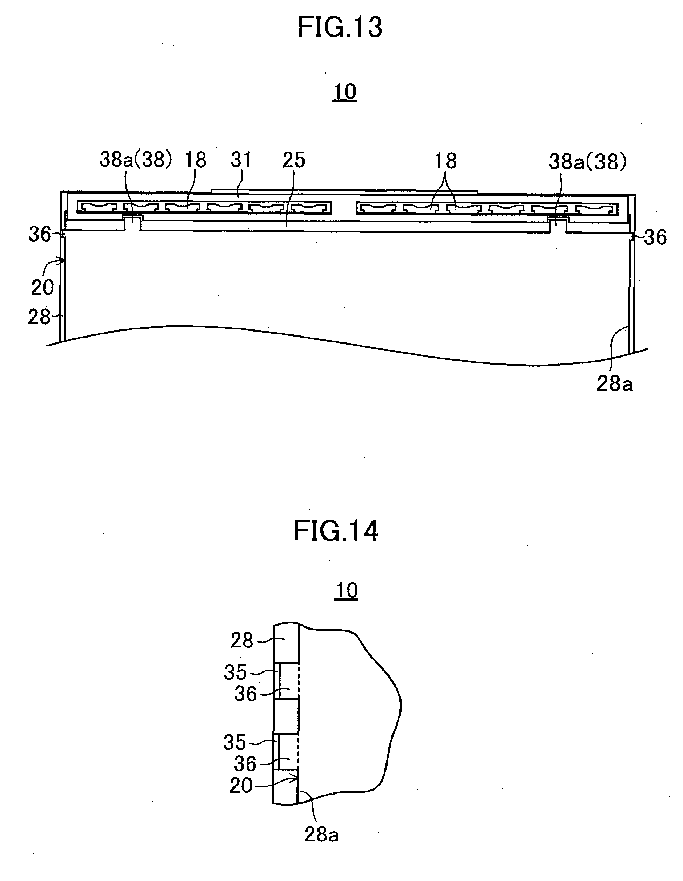

FIG. 12 is an enlarged plan view illustrating LED elements 18 of a backlight unit according to a variation of the first embodiment and a region surrounding the LED elements 18, and FIG. 13 is an enlarged plan view illustrating LED elements 18 of a backlight unit according to another variation of the first embodiment and a region surrounding the LED elements 18. FIG. 14 is an enlarged plan view illustrating engagement portions according to still another variation of the first embodiment and a region surrounding the engagement portions.

While, in the first embodiment, an example in which the optical sheet member 20 includes both the first and second protrusions 38a and 38b was described, the present invention should not be limited to the example. Specifically, as illustrated in FIG. 12, an optical sheet member 20 may include a second protrusion 38b, and does not need to include first protrusions 38a. As illustrated in FIG. 13, an optical sheet member 20 may include first protrusions 38a, and does not need to include a second protrusion 38b. Such variations also enable preferable fixing of the optical sheet member 20.

While, in the first embodiment, an example in which regions of the optical sheet member 20 spaced apart by a relatively long distance are each provided with a corresponding one of the engagement portions 36 was described, the present invention should not be limited to the example. Specifically, as illustrated in FIG. 14, regions of an optical sheet member 20 spaced apart may be each provided with two or more of engagement portions 36. In this case, grooves 35 or through holes may be formed in a frame 28 to correspond to the engagement portions 36. Such provision can also increase the area where the frame 28 fixes the optical sheet member 20. To ensure the mechanical strength of the frame 28, the optical sheet member 20 is preferably fixed via the protrusions 38 without forming many grooves 35 or many through holes in the frame 28.

### «Second Embodiment of the Invention»

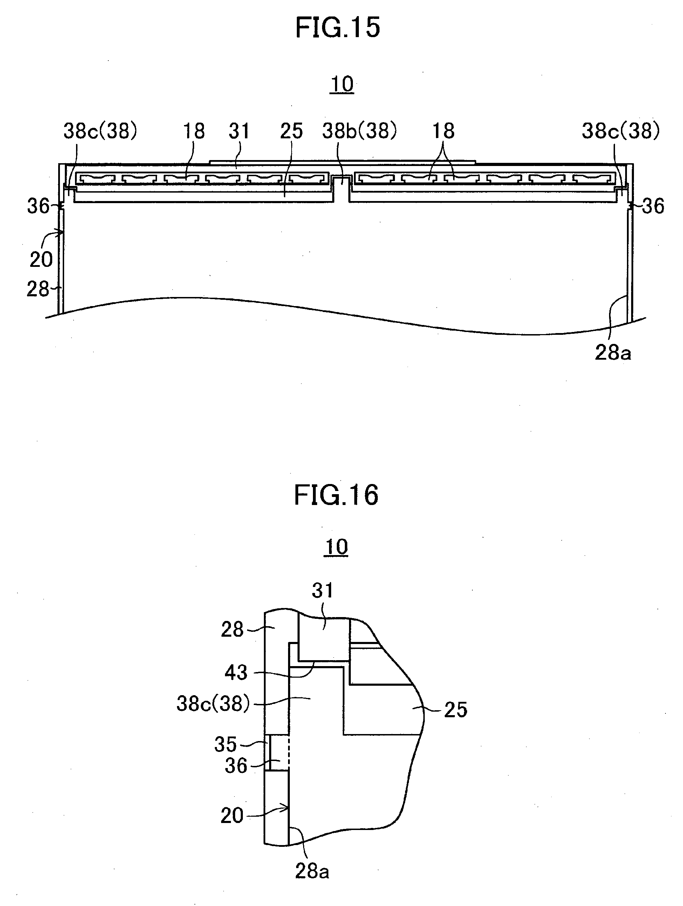

FIG. 15 illustrates a second embodiment of the present invention.

FIG. 15 is an enlarged plan view illustrating LED elements 18 of a backlight unit 10 according to a second embodiment and a region surrounding the LED elements 18. FIG. 16 is an enlarged plan view illustrating one of third protrusions 38c in FIG. 15 and a region surrounding the one of the third protrusions 38c. Note that in the following embodiments, like elements to those of FIGS. 1-14 will be denoted by like reference characters, and will not be described in detail.

In this embodiment, an optical sheet member 20 includes third protrusions 38c instead of the first protrusions 38a of the first embodiment. In other words, the optical sheet member 20 of this embodiment includes a second protrusion 38b and the third protrusions 38c.

As illustrated in FIG. 15, the third protrusions 38c protrude from a side of the optical sheet member 20 near the LED elements 18 toward the LED elements 18. In contrast, as illustrated in FIG. 16, a portion of a first adhesive material 31 near a distal end of each third protrusion 38c has a cutout portion 43. A distal end portion of the third protrusion 38c is located inside the cutout portion 43, and contacts a light guide plate 25 inside the cutout portion 43.

Similarly to the second protrusion 38b, the third protrusions 38c are sandwiched between the light guide plate 25 and a flexible substrate 30, thereby fixing the third protrusions 38c to the light guide plate 25. The distal end portion of each third protrusion 38c is located inside the cutout portion 43 to reduce the displacement of the optical sheet member 20 along an exit surface 25b.

For the above reason, also according to the second embodiment, a region of the optical sheet member 20 of the backlight unit 10 near the LED elements 18 is effectively used to allow a sufficiently large area of each of the second and third protrusions 38b and 38c of the optical sheet member 20 to be fixed to the light guide plate 25. This can ensure that while a frame 28 itself is narrow, and a frame portion of a liquid crystal display 1 is thus narrow, the optical sheet member 20 is fixed within the backlight unit 10.

### (Variation)

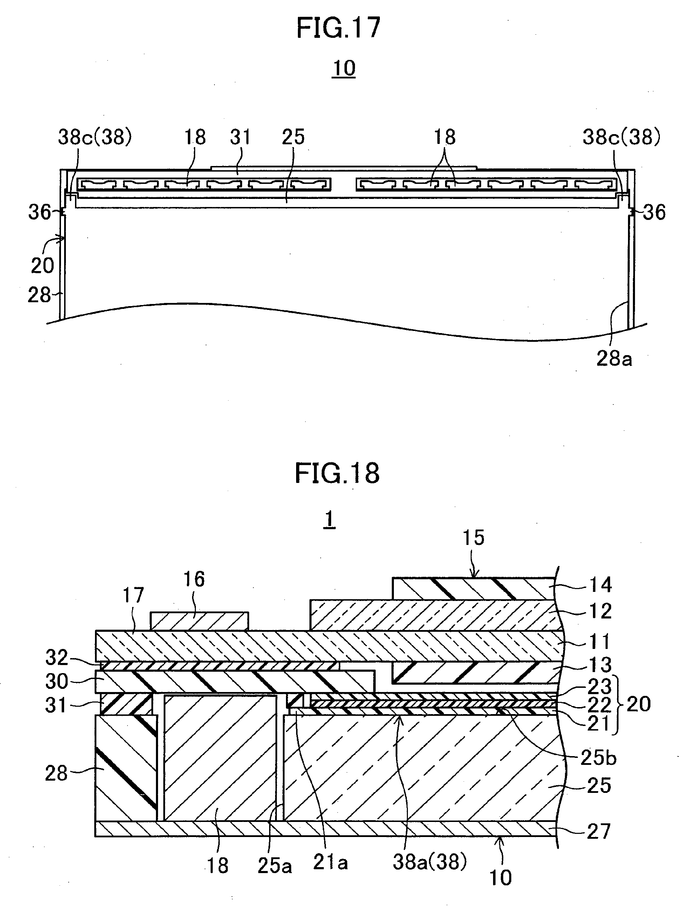

FIG. 17 is an enlarged plan view illustrating LED elements 18 of a backlight unit according to a variation of the second embodiment and a region surrounding the LED elements 18.

While, in the second embodiment, an example in which the optical sheet member 20 includes both the second and third protrusions 38b and 38c was described, the present invention should not be limited to the example. Specifically, as illustrated in FIG. 17, an optical sheet member 20 may include third protrusions 38c, and does not need to include a second protrusion 38b. This also enables preferable fixing of the optical sheet member 20.

### «Third Embodiment of the Invention»

FIG. 18 illustrates a third embodiment of the present invention.

FIG. 18 is a cross-sectional view illustrating the configuration of a liquid crystal display 1 according to the third embodiment.

While, in the first and second embodiments, the protrusions 38 of the optical sheet member 20 are sandwiched between the flexible substrate 30 and the light guide plate 25 so as to be fixed, protrusions 38 may be fixed with an adhesive material.

Specifically, as illustrated in FIG. 18, a first protrusion 38a of an optical sheet member 20 of this embodiment includes an extension portion 21 a. The extension portion 21a corresponds to a portion of a lowermost first optical sheet 21 significantly protruding beyond second and third optical sheets 22 and 23. While the extension portion 21 a contacts the light guide plate 25 inside a recessed portion 41 of a first adhesive material 31, the extension portion 21a is adhesively fixed to the flexible substrate 30 with the first adhesive material 31 interposed therebetween. In other words, the extension portion 21 a of the first protrusion 38a is sandwiched between the light guide plate 25 and both of the first adhesive material 31 and the flexible substrate 30, and a proximal end portion of the extension portion 21a is sandwiched between the light guide plate 25 and the flexible substrate 30.

An adhesive material may be interposed between the flexible substrate 30 and, not only the first optical sheet 21, but at least one of the optical sheet 21, 22 or 23. The protrusion 38 fixed with an adhesive material should not be limited to the first protrusion 38a, and may be a second protrusion 38b or a third protrusion 38c.

Thus, the third embodiment can ensure that while the frame 28 itself is narrow, and a frame portion of the liquid crystal display 1 is thus narrow, the optical sheet member 20 is fixed within a backlight unit 10 similarly to the first and second embodiments.

Additionally, since the extension portion 21a of the first optical sheet 21 of the optical sheet member 20 is adhesively fixed to the flexible substrate 30 with the first adhesive material 31, this can further ensure that the optical sheet member 20 is fixed within the backlight unit 10.

The present invention should not be limited to the first through third embodiments described above, but also includes configurations obtained by appropriately combining the first through third embodiments.

### INDUSTRIAL APPLICABILITY

As described above, the present invention is useful for backlight units and liquid crystal displays including backlight units.

### DESCRIPTION OF REFERENCE CHARACTERS

- 1: LIQUID CRYSTAL DISPLAY
- 10: BACKLIGHT UNIT
- 15: LIQUID CRYSTAL DISPLAY PANEL
- 18: LED ELEMENT (LIGHT SOURCE)
- 20: OPTICAL SHEET MEMBER
- 21: FIRST OPTICAL SHEET
- 21a: EXTENSION PORTION
- 22: SECOND OPTICAL SHEET
- 23: THIRD OPTICAL SHEET
- 25: LIGHT GUIDE PLATE
- 25a: ENTRANCE SURFACE
- 25b: EXIT SURFACE
- 28: FRAME
- 30: FLEXIBLE SUBSTRATE (FIXING MEMBER)
- 31: FIRST ADHESIVE MATERIAL
- 35: GROOVE
- 36: ENGAGEMENT PORTION
- 38: PROTRUSION
- 38a: FIRST PROTRUSION
- 38b: SECOND PROTRUSION
- 38c: THIRD PROTRUSION

## Claims

1. A backlight unit comprising:
a light guide plate having an entrance surface on which light is incident, and an exit surface through which guided light exits;
a light source facing the entrance surface of the light guide plate;
an optical sheet member located toward the exit surface of the light guide plate; and
a frame surrounding the optical sheet member, the light source, and the light guide plate to retain the optical sheet member, the light source, and the light guide plate, wherein
the optical sheet member includes a protrusion protruding toward the light source and fixed to the light guide plate.

2. The backlight unit of claim 1, wherein
the protrusion is sandwiched between the light guide plate and a fixing member so as to be fixed to the light guide plate.

3. The backlight unit of claim 2, wherein
the fixing member is a flexible substrate connected to the light source.

4. The backlight unit of claim 1, wherein
the protrusion is fixed to the light guide plate and the frame.

5. The backlight unit of claim 4, wherein
the protrusion is sandwiched between a fixing member and both of the light guide plate and the frame so as to be fixed to the light guide plate and the frame.

6. The backlight unit of claim 5, wherein
the fixing member is a flexible substrate connected to the light source.

7. The backlight unit of any one of claims 4-6, wherein
the light source includes a plurality of light sources provided along the entrance surface of the light guide plate, and
the protrusion is located between an adjacent pair of the light sources.

8. The backlight unit of claim 2, 3, 5, 6, or 7, wherein
the optical sheet member includes a plurality of optical sheets, and
an adhesive material is interposed between at least one of the optical sheets and the fixing member.

9. The backlight unit of any one of claims 1-8, wherein
the frame has a groove or a through hole extending across a width of the frame, and
the optical sheet member has an engagement portion protruding to engage in the groove or the through hole.

10. A liquid crystal display comprising:
the backlight unit of any one of claims 1-9; and
a liquid crystal display panel facing the backlight unit.
